# EUROPEAN PATENT APPLICATION

(11) **EP 1 840 643 A1**
(43) Date of publication of application: **03.10.2007**
(21) Application number: 07006328.4
(22) Date of filing: 27.03.2007
(51) Int. Cl.: G03B 21/20

(54) **Projector**

(30) Priority: 31.03.2006 JP 2006098992
(71) Applicant: Funai Electric Co., Ltd., Daito-shi Osaka 574-0013 (JP)
(72) Inventor: Suzuki, Masakazu, Daito-shi Osaka 574-0013 (JP)
(74) Representative: Grünecker, Kinkeldey, Stockmair & Schwanhäusser Anwaltssozietät

(57) **Abstract**

A projector (1) includes a lamp unit (10). This lamp unit (10) includes a lamp (13) which emits light, a shield member (2) in which an opening portion (25) is formed which allows light emitted by the lamp (13) to radiate to the exterior, a cover glass (7) fitted to the opening portion (25), and a retention member (8) which retains the cover glass (7) by squeezing it against the shield member (2). The retention member (8) is provided with projecting flange portions (821-824) which press against the four edges of the cover glass (7).

## Description

### BACKGROUND OF THE INVENTION

In the prior art, projectors have been implemented which project pictures upon screens in front of their projection lenses using lamp units. Such a lamp unit is covered with a lamp cover having an opening portion in front of the lamp unit. Such a lamp cover emits light from this opening portion, while leakage of light from the parts thereof other than this opening portion is prevented. To the opening portion, there is provided a cover glass which is transparent to light of a predetermined range of wavelengths, and which intercepts ultraviolet rays. Due to this, the cover glass prevents ultraviolet rays included in the light from the light source lamp from getting out to the exterior. Furthermore, in order to prevent these ultraviolet rays from passing through the lamp cover and leaking, there is a tendency to manufacture the material of the lamp cover not from plastic resin, but from aluminum alloy.

Moreover, since the vicinity of the lamp attains an extremely high temperature, the cover glass can easily fail, and can easily become distorted. As a countermeasure against this, for example as described in Japanese Laid-Open Patent Publication Heisei 7-63966, a structure has been disclosed which prevents distortion of the cover glass when it undergoes thermal expansion. In this patent document, there is disclosed a structure in which, in order to retain the cover glass on all four of its sides, each of four retention members is attached with a screw fastening. With this structure described in Japanese Laid-Open Patent Publication Heisei 7-63966, in consideration of thermal expansion, the mutual gaps between the retention members are set up to provide clearances greater than the width of the cover glass, and the cover glass is retained with an elastic member like a spring.

However, if the structure described in Japanese Laid-Open Patent Publication Heisei 7-63966 is employed for this lamp cover, each of the plurality of retention members which retain the cover glass needs to be individually attached, and furthermore, it is necessary to press the cover glass by hand, or the like, when attaching the retention members, so that the assembly procedure is not straightforward.

Accordingly, in order to make the assembly of the cover glass easy, it is arranged to provide projections for position determination which set the position of two of the corners of the cover glass at the opening portion where the light of the lamp unit is emitted.

If the lamp cover, including its opening portion, is made from aluminum alloy, then, since this aluminum alloy is hard, if as previously described the lamp cover is dropped from the typical height at which it is carried by a person, the retention portion for the cover glass cannot sufficiently alleviate the shock, and there has been the problem that the corners of the cover glass may be damaged.

Accordingly, the object of the present invention is to provide a projector which has a simple structure and which is easy to assemble, and which is able to prevent damage to the cover glass even if the main body of the projector is dropped from the typical height at which it is carried by a person.

### SUMMARY OF THE INVENTION

The projector of the present invention projects a picture upon a screen using light emitted from a lamp unit.

The lamp unit includes a lamp, a shield member, a cover glass, and a retention member.

The lamp is a light source for projecting a picture upon a screen.

The shield member is formed with an opening portion which allows light emitted by the lamp to be radiated to the exterior. The cover glass is fitted to the opening portion of the shield member.

The retention member retains the cover glass by squeezing it against the shield member.

And the retention member has a plurality of projecting flange portions, each of which is provided so as to confront one of a plurality of edges of said cover glass.

### BRIEF DESCRIPTION OF THE DRAWINGS

Fig. 1 is a perspective view showing the general structure of a projector according to an embodiment of the present invention;
Fig. 2A and Fig. 2B are details drawing showing a shield member of this embodiment; and
Fig. 3A and Fig. 3B are details drawing showing a retention member which, in this embodiment, is attached to a lamp cover, and a Figure showing this retention member in the state in which it is installed to the lamp cover.

### DETAILED DESCRIPTION OF THE INVENTION

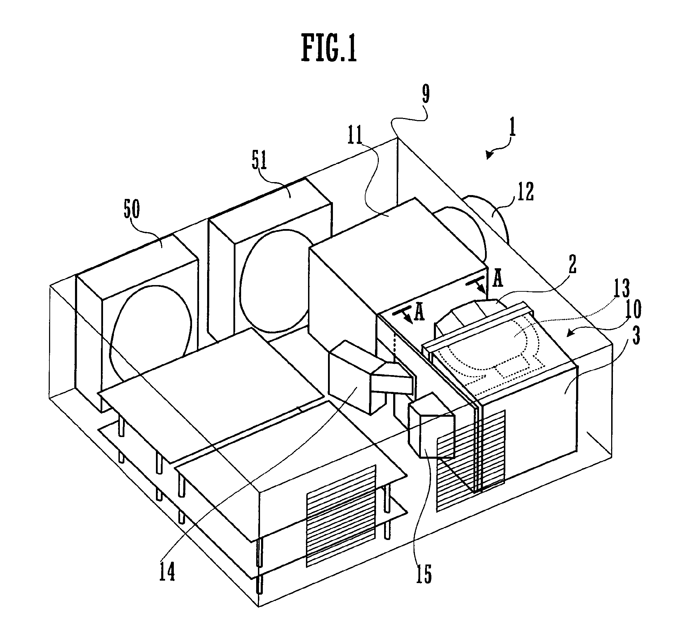

Fig. 1 is a perspective view showing the general structure of the interior of a projector. The structure of this projector 1 will now be explained in the following. A lamp unit 10 comprises a lamp cover 3 which includes a shield member 2, and a lamp 13 inside the lamp cover 3. This lamp 13 emits light for projecting a picture. The lamp cover 3 is a cover provided over the outside of the lamp 13. And the shield member 2 is a member which shields light emitted by the lamp 13, and which is provided with an opening portion through which the light emitted by the lamp 13 is radiated towards a picture projection unit 11. The picture projection unit 11 comprises a picture display device such as a DMD (Digital Mirror Device) or the like and a color wheel (neither of which is shown in the Figures) and a projection lens 12, and projects a picture upon a screen using the light which is outputted from the lamp unit 10. Main fans 50 and 51 blow air, and thereby lower the temperature within the chassis 9. A portion of this air which is blown is conducted from an intake aperture 14 into the lamp unit 10, and is discharged from an exhaust aperture 15. The temperature of the lamp 13, which generates a lot of heat, is lowered by the flow of air thus being blown through the lamp unit 10. The chassis 9 is a box which houses the various components of the projector 1.

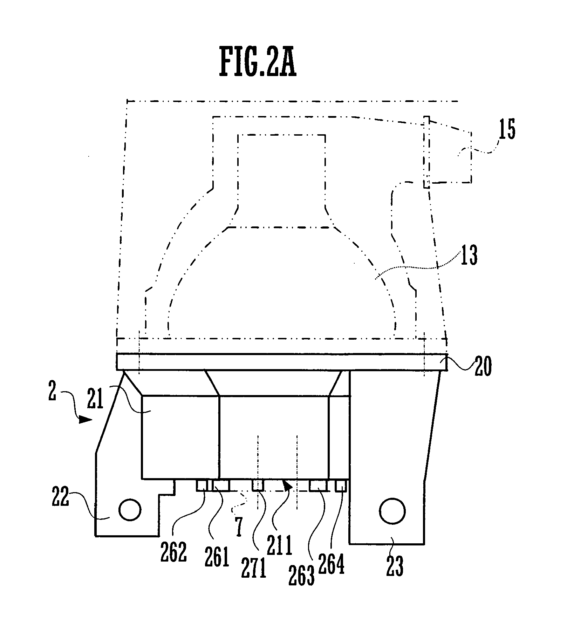

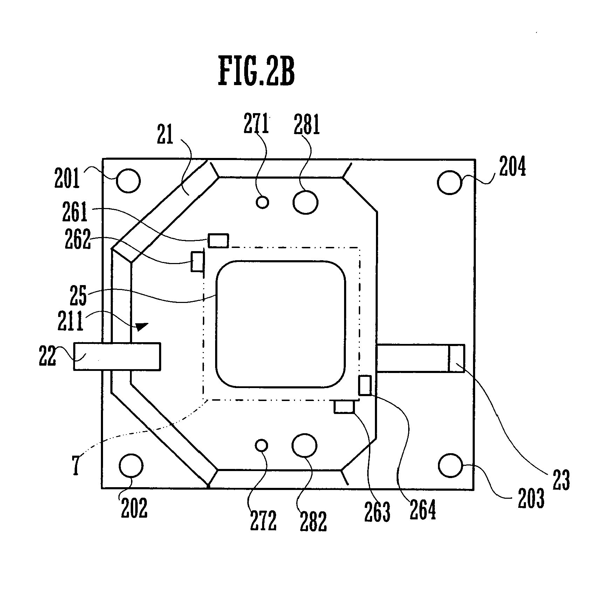

The structure of the shield member 2 will now be described in detail using Fig. 2A and Fig. 2B. Fig. 2A is a plan view as seen from the top of the projector 1. And Fig. 2B is a view as seen from the direction A-A in Fig. 1. It should be understood that, in Fig. 2A and Fig. 2B, the arrangement of the lamp cover 3, the lamp 13, the exhaust aperture 15, and the cover glass 7 is shown by the double dotted broken lines.

In order to prevent ultraviolet rays passing through the shield member 2, the shield member 2 is made from aluminum alloy. A flange 20 of the shield member 2 is a flange portion for attaching the shield member 2 to the lamp cover 3 so as to cover the lamp 13.

A body 21 is formed as an approximately octagonal tubular unit with an internal cavity. This body 21 has a flat fitting surface 211 on its side opposite to the flange 20. An opening portion 25 is opened in this fitting surface 211.

Fitting portions 22 and 23 are flat plates for fixing the shield member 2 side of the lamp unit 10, and on their insides they are provided with holes for passing bolts.

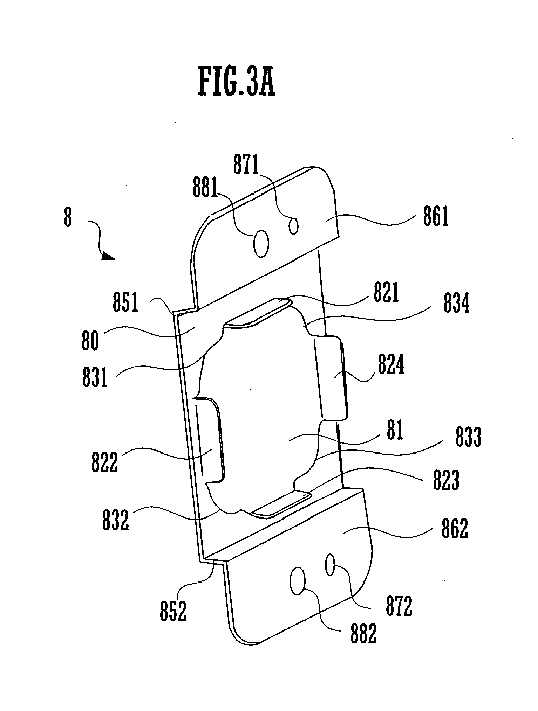

The opening portion 25 is a hole opened in the fitting surface 211, and is formed to be smaller than a cover glass 7 (described hereinafter) which is fitted thereto. Due to this, it is possible to fit the cover glass 7 by sandwiching it between the opening portion 25 and a retention member 8 which will be described hereinafter (refer to Fig. 3A). The opening portion 25 allows light from the lamp 13 to be emitted towards the picture projection unit 11. Furthermore the cover glass 7, which is made as a four cornered plate shaped piece of glass as shown by the double dotted broken lines, is fitted to the opening portion 25.

Projecting portions 261 ∼ 264 are provided upon the fitting surface 211, located at opposite ends of a diagonal of the four cornered cover glass 7 so as to receive and surround each of the two corners at these ends of the diagonal, and are formed integrally with the shield member 2. When assembling the cover glass 7, these projecting portions 261 ∼ 264 determine the position of the corners of the cover glass upon this diagonal line. Due to this, it becomes easy to fit the cover glass 7 to the lamp cover 2.

It should be understood that these projecting portions 261 ~264 may not be formed integrally with the shield member 2; they may be attached thereto. For example, it would also be acceptable for them to be fixed by welding, screw fixing, or the like.

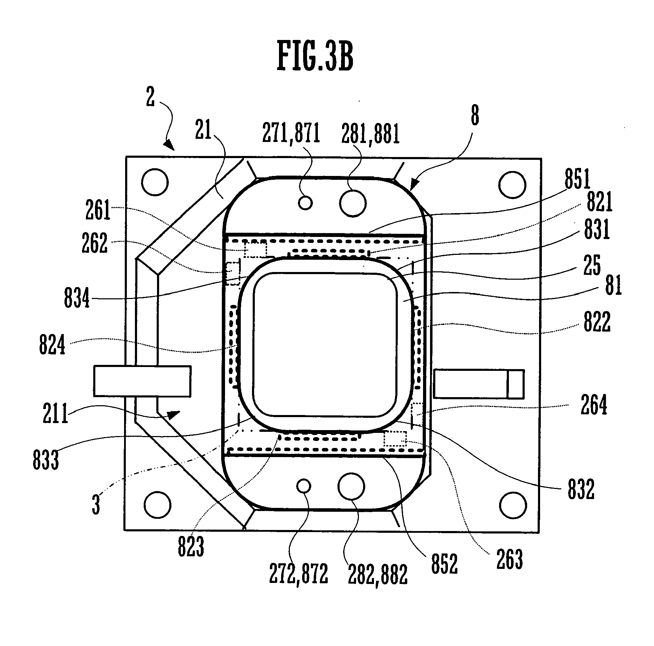

Position determination pins 271 and 272 are pins for position determination when fixing the retention member 8 which will be described hereinafter (refer to Fig. 3A and Fig. 3B). These position determination pins 271 and 272 may be formed integrally with the body 21, or may be formed by opening holes in the body 21 and driving position determination pins thereinto. And fitting holes 281 and 282 are threaded holes for fixing the retention member 8 with bolts. It should be understood that this retention member 8 covers from above over the cover glass 7 which is fitted to the fitting surface 211, and is fixed by bolts in the fitting holes 281 and 282.

The structure of the retention member 8, and the method of fitting the cover glass 7 and the retention member 8 will now be explained using Fig. 3A and Fig. 3B. Fig. 3A is a detail drawing showing the retention member 8. And Fig. 3B is a view as seen in the direction of the arrows A-A in Fig. 1, showing this retention member 8 in the state when it is installed to the lamp cover 3.

As shown in Fig. 3A, the retention member 8 is formed by bending a single plate. Aluminum plate may be used, for example, as the material for this retention member 8. In the following, the various portions of this retention member 8 will be explained.

A cover glass holding portion 80 is an indented portion which holds the cover glass 7, and it constitutes a holding portion which fixes the cover glass 7 by pressing it against the shield member 2. An aperture 81 is opened in the member 8 for allowing the light from the lamp 13 to pass through, and has a shape which matches the shape of the cover glass 7. Projecting flange portions 821 ∼ 824 are projecting flange portions which are made by bending projecting portions provided as extending from the sides of the aperture 81 towards the side of fitting portions 861 and 862 which will be explained hereinafter. When the retention member 8 is fitted, these projecting flange portions 821 - 824 face and confront the four sides of the cover glass 7, and cover these four sides at the same time. The region which is surrounded within these projecting flange portions 821 ~ 824 is formed to be wider than the width of the cover glass 7, in consideration of the fact that the cover glass 7 expands due to the heat of the lamp 13. Furthermore, the region which is surrounded by the projecting portions 261 ∼ 264 (refer to Fig. 3B is formed to be yet larger than the region which is surrounded on the inside of the projecting flange portions 821~ 824. Since, because of this, when the projector 1 is dropped, not the corners of the cover glass 7, but rather its edges strike against the projecting portions 261 ∼ 264, accordingly the corners of the cover glass 7 do not suffer damage at this time.

Radiused portions 831 ∼ 834 are circular arcs which are provided at the four corners of the aperture 81. These radiused portions 831 ∼ 834 are formed so that, when the retention member is positioned so as to cover over the cover glass 8, the portions on the insides of these radiused portions 831 ∼ 834 contact the cover glass 7 at positions inwards from the external edge of the cover glass 7. Due to this, it is possible for the corners of the cover glass 7 to be squeezed by the retention member 8 and the insides of the radiused portion 831 ∼ 834, so that it is possible for the retention member 8 to press the cover glass 7 against the shield member 2.

It should be understood that these radiused portions 831 ~ 834 may be replaced by chamfering. If this is done, it is still possible to arrange for a portion of the aperture 81 to be formed so as to be inwards of the external circumference of the cover glass 7. Accordingly, the retention member 8 can press the four corners of the cover glass 7 against the shield member 2 with these chamfered portions, so that the retention member 8 can retain the cover glass 7.

Curved portions 851 and 852 are bent portions which connect from the cover glass holding portion 80, i.e. the central portion of the retention member 8, to both flanks, and they are folded to and fro in cranked shapes.

The fitting portion 861 is a portion which continues on from the curved portion 851, and which is fixed to the shield member 2. And the fitting portion 862 is a portion which continues on from the curved portion 852, and which fixes the retention member 8 to the shield member 2. And holes for position determination 871 and 872 are holes for position determination when fitting the retention member 8 to the shield member 2. Moreover, fitting holes 881 and 882 are holes for fixing the retention member 8 to the shield member 2 with screws.

Now, using Fig. 3B, the method for fitting the cover glass 7 and the retention member 8 to the shield member 2 will be explained.

First, the cover glass 7 is mounted within the projecting portions 261 - 264 of the shield member 2. By mounting it in this manner, it is possible to perform position determination for the cover glass 7 in a simple and easy manner.

Next, the retention member 8 is fitted to the shield member 2 from over the cover glass 7. At this time, the indentation of the cover glass holding portion 80 matches the cover glass 7. Furthermore, the hole for position determination 871 of the retention member 8 goes over the position determination pin 271 of the shield member 2, while the hole for position determination 872 of the retention member 8 goes over the position determination pin 272 of the shield member 2. When the retention member 8 is fitted in this manner, the retention member 8 covers the cover glass 7, and, along with the fitting holes 281 and 282 overlapping the holes 881 and 882 respectively, also the projecting flange portions 821 ∼ 824 of the retention member 8 simultaneously come to be disposed around the cover glass 7.

Next, screws are inserted into the fitting holes 881 and 882, and these screws are fixed into the threaded holes 281 and 282 of the shield member 2. When the retention member 8 has been fitted to the shield member 2 from over the cover glass 7 in this manner, the cover glass 7 is thereby retained. With regard to retention of the cover glass 7 in the direction perpendicular to its surface, this is performed by the portions at the exteriors of the radiused portions 831 - 834 of the retention member 8 pressing the four corners of the cover glass 7 against the shield member 2. Furthermore, with regard to retention of the cover glass 7 in the direction parallel to its surface, this is performed by the frictional force due to the retention member 8 pressing the cover glass 7 against the shield member 2.

As previously described, in consideration of thermal expansion of the cover glass 7, the projecting flange portions 821 - 824 of the retention member 8 are positioned apart at gaps which are larger than the width of the cover glass 7. Accordingly, although the retention member 8 does not directly retain the corners and the sides of the cover glass 7, if the projector 1 is dropped, then the projecting flange portions 821 ~ 824 of the retention member 8 retain all of the four sides of the cover glass 7.

Furthermore, since the region which is surrounded at two of its corners by the projecting portions 261 ∼ 264 of the shield member 2 is made to be yet larger than the region which is surrounded by the projecting flange portions 821 ∼ 824 which surround the cover glass on its four sides, accordingly, when the projector 1 is dropped, not the corners of the cover glass 7, but rather one of the edges of the cover glass 7 and one of the projecting portions 261 ∼ 264 come into mutual contact. Due to this, when the projector 1 is dropped, the shock which is applied to the cover glass 7 is spread. It has been actually verified, according to tests performed by the present inventor, that, when the projector 1 is dropped from the height at which it is typically carried by a person, no damage is caused to the four edges or to the four corners of the cover glass 7.

It should be understood that although, in the embodiment described above, the region which is surrounded at two of its corners by the projecting portions 261 ∼ 264 of the shield member 2 is made to be larger than the region which is surrounded by the projecting flange portions 821 ∼ 824 which surround the cover glass on its four sides, even if these regions are made to be of the same size, there is no change with regard to the beneficial effect of the projecting flange portions 821 ∼ 824 being able to support the edges of the cover glass 7 when the projector is dropped.

Furthermore since, in the process of fitting the cover glass 7, it is only necessary to fit the cover glass 7 within the insides of the projecting portions 261 ∼ 264 of the cover glass 7, and to fit the retention member 8 over the position determination pins 271 and 272, with bolts being fixed into the fitting holes 281 and 282, accordingly the assembly process is simple and easy. There is no requirement for any troublesome operation such as that described in the previously mentioned Japanese Laid-Open Patent Publication Heisei 7-63966, of, after having mounted with screws a retention member which corresponds to two of the four sides of the cover glass, to insert the cover glass into the retention member, then to insert an elastic member over the cover glass, and finally to tighten up the screws while performing adjustment.

According to the above description, with the projector 1 of this embodiment, while employing a structure which can be simply and easily assembled and moreover which uses a simple retention member 8, it is possible to prevent damage to the cover glass 7 if the projector main body is dropped.

It should be understood that, if the retention member 8 is made from a thin plate or the like, so that the projecting flange portions 821 ∼ 824 are endowed with elasticity, then since, as described above, when the projector is dropped, shock imparted to the four sides of the cover glass 7 is absorbed, accordingly it is possible to eliminate damage to the corners of the cover glass 7 to yet a further level. If this structure is employed, then it is desirable to make the spaces between the projecting portions 261 ∼ 264 bigger than the region over which the cover glass 7 is capable of shifting due to the elasticity of the projecting flange portions 821 ∼ 824, since thereby it is ensured that, when the projector 1 is dropped, the projecting portions 261 ∼ 264 which retain the corners of the cover glass 7 do not come into contact with them.

Furthermore, it would also be acceptable to provide a structure in which no such portions as the projecting portions 261 ∼ 264 were provided to the shield member 2. In this case as well, if the projector 1 is dropped from a height such as that at which it is typically carried by a person, the edges of the cover glass 7 are retained by the projecting flange portions 821 ~ 824 of the member 8, so that no damage to the corners of the cover glass 7 occurs.

Furthermore although, in the above explanation, the case was explained in which the cover glass 7 had four corners, it would also be acceptable for it to have some other polygonal shape, for example a triangle. Moreover although, in the above explanation, the projecting flange portions 821 ∼ 824 retained the cover glass 7 on all four of its sides, it would also be acceptable for them only to hold it on some of its sides. The same is the case if the cover glass 7 is some polygon having other than four sides. However, the beneficial effect described above of dispersing the shock when the projector is dropped is higher, the wider is the area over which the projecting flange portions contact the cover glass 7.

## Claims

1. A projector (1) which projects a picture upon a screen using light emitted from a lamp unit (10), wherein said lamp unit (10) comprises:
a lamp (13) which constitutes a light source;
a shield member (2) in which an opening portion (25) is formed which allows light emitted by said lamp (13) to be radiated to the exterior;
a cover glass (7) which is fitted to said opening portion (25) of said shield member (2); and
a retention member (8) which retains said cover glass (7) by squeezing it against said shield member (2),
wherein said retention member (8) comprises a plurality of projecting flange portions (821-824), each of which is provided so as to confront one of a plurality of edges of said cover glass (7).

2. A projector (1) as described in Claim 1, wherein said shield member (2) comprises projecting portions (261-264) which surround each of two corners of said cover glass (7) which are not mutually adjacent.

3. A projector (1) as described in Claim 2, wherein said projecting portions (261-264) are formed so that the region surrounded by said projecting portions (261-264) is larger than the region surrounded by said projecting flange portions (821-824).

4. A projector (1) as described in Claim 1, wherein said retention member (8) is formed by bending a single plate.
